# Europäisches Patentamt
# European Patent Office
# Office européen des brevets

(11) Veröffentlichungsnummer: **0 072 979**
**B1**

(12) **EUROPÄISCHE PATENTSCHRIFT**

(45) Veröffentlichungstag der Patentschrift:
26.11.86

(21) Anmeldenummer: 82107322.8

(22) Anmeldetag: 12.08.82

(51) Int. Cl.⁴: **C 09 D 3/66,** C 08 L 51/08,
C 08 F 283/02, C 09 D 5/02

(54) **Wasserverdünnbare Harzzubereitungen auf Basis von Alkydharzen und Polyacrylatharzen sowie deren Verwendung als Lackbindemittel.**

(30) Priorität: 20.08.81 DE 3132937

(43) Veröffentlichungstag der Anmeldung:
02.03.83 Patentblatt 83/9

(45) Bekanntmachung des Hinweises auf die Patenterteilung:
26.11.86 Patentblatt 86/48

(84) Benannte Vertragsstaaten:
AT BE CH DE FR GB LI

(56) Entgegenhaltungen:
US-A-4 116 903

(73) Patentinhaber: Henkel Kommanditgesellschaft auf Aktien, Postfach 1100 Henkelstrasse 67, D-4000 Düsseldorf- Holthausen (DE)

(72) Erfinder: Wilk, Hans- Christoph, Dr., An der Obererft 94, D-4040 Neuss (DE)
Erfinder: Wegemund, Bernd, Dr., Händelweg 3, D-5657 Haan (DE)

## Beschreibung

Die Erfindung liegt auf dem Gebiet der ofentrocknenden Lackbindemittel. Sie beinhaltet eine Kombination aus Alkydharzen und Acrylatharzen, welche zu besonders umweltfreundlichen Wasserlacken verarbeitet werden kann. Die Erfindung betrifft weiterhin ein Verfahren zur Herstellung dieser Lackharzkombination.

Auf dem Gebiet der ofentrocknenden Lacke haben Umweltschutzüberlegungen große Bedeutung erlangt. So wird angestrebt, Produkte zu formulieren, die beim Einbrennen möglichst keine flüchtigen, die Atmosphäre verunreinigenden Substanzen, wie z.B. Lösungsmittel abgeben. Eine Möglichkeit zur Lösung dieses Problems stellt die Verwendung der sogenannten Wasserlacke dar. Unter Wasserlacken versteht man wasserverdünnbare Harzzubereitungen auf Basis neutralisierter Bindemittelharze. Um ein Harz als Wasserlack konfektionieren zu können, müssen im allgemeinen Hilfsstoffe mitverwendet werden. Gängige Hilfsstoffe sind mitunter auch Lösungsmittel, flüchtige Amine oder Emulgatoren. Verständlicherweise richten sich Art und Menge der verwendeten Hilfsstoffe nach der chemischen Natur des Harzes. Es hat nun nicht an Bemühungen gefehlt, Systeme aufzufinden, bei denen diese Hilfsstoffe ganz oder mindestens zum Teil entbehrlich sind oder durch umweltfreundliche Stoffe ersetzt werden können.

Bei Lackbindemitteln auf Alkydharzbasis führten diese Bemühungen zu Systemen, welche selbst unter Einbrennbedingungen keine die Atmosphäre verunreinigenden flüchtigen Bestandteile abgeben. Darüber hinaus sind Emulgatoren bekannt, welche beim Einbrennvorgang ihre Hydrophilie verlieren, um so die gewünschte Wasserfestigkeit der Lacküberzüge zu gewährleisten. Entsprechende Systeme sind z.B. in den folgenden deutschen Offenlegungsschriften beschrieben: DE-OS 27 11 000, DE-OS 27 11 002, DE-OS 27 11 001, DE-OS 27 10 992, DE-OS 27 10 993, DE-OS 27 10 994, DE-OS 27 54 141, DE-OS 27 54 091, DE-OS 27 54 140, DE-OS 27 54 092.

Bei Lacken mit Bindemitteln auf Acrylatbasis ist es technisch jedoch äußerst schwierig, auf Hilfslösungsmittel und auf gängige Emulgatoren, die beim Einbrennen ihre HydroPhilie nicht verlieren, zu verzichten. Unter Acrylatharzen seien hier Copolymere aus Acryl- und/oder Methacrylsäure und ihren Estern sowie Styrol und anderen gängigen Comonomeren, wie z.B. Acrylnitril verstanden. Der Gehalt derartiger Harze an Bestandteilen, die entweder beim Verarbeiten stören wie Lösungsmittel oder im fertigen Lack stören wie Emulgatoren, erklärt sich aus der Herstellung. Diese erfolgt üblicherweise entweder durch Polymerisation in Lösung oder durch Emulsionspolymerisation. In beiden Fällen ist es aufgrund der ansich gewünschten harzartigen Konsistenz der Produkte äußerst schwierig, Hilfsstoffe abzutrennen. Ein weiteres Herstellungsverfahren, nämlich die Polymerisation der Monomeren in Substanz ist wegen der starken Exothermie und dem raschen Viskositätsanstieg großtechnisch nur in sehr aufwendigen Apparaturen zu beherrschen.

Acrylatlacke haben eine Menge gewünschter technischer Eigenschaften, so z. B. hohe chemische Resistenz, mechanische Beständigkeit und gute Polierbarkeit. Es ist bei Lösungsmittellacken bekannt, sie in Kombination mit anderen Harzen, etwa Alkydharzen, zu verwenden. Dies lehrt z. B. die europäische Patentanmeldung 0006 517. Es bestand daher ein Bedürfnis auch Wasserlacke zu beschaffen, welche die günstigen Eigenschaften umweltfreundlicher Alkydharzbindemittel und die günstigen technischen Eigenschaften von Acrylatharzen vereinigen. Nach dem Stand der Technik standen hierzu nur Acrylatzubereitungen zur Verfügung, die entweder Restlösungsmittel oder flüchtige Amine oder solche Emulgatoren enthielten, die unter Einbrennbedingungen ihre Hydrophilie nicht verlieren. Bestenfalls hätten nach aufwendigen Verfahren gereinigte oder in Substanz polymerisierte Produkte verwendet werden können.

Die US-PS 4 116 903 beschreibt die Verwendung von neutralisierten wäßrigen Lösungen von Alkydharzen als Emulgiermittel zur Herstellung und Stabilisierung von Emulsionspolymeren aus Vinylmonomeren. Nach den Angaben dieser Druckschrift können wäßrige Lösungen von Alkydharzen, die etwa 10 bis 60 Gewichtsprozent an gelöstem Alkydharz enthalten, zur Emulsionspolymerisation von beispielsweise Vinylidenchlorid, Styrol, Alkyl(meth)-acrylaten und dergleichen eingesetzt werden. Die Mitverwendung von bis zu etwa 50 Gewichtsprozent an wassermischbaren organischen, flüssigen Lösungsmitteln in diesem Polymerisationmedium ist vorgesehen. Gegenüber der nachfolgend geschilderten Lehre der vorliegenden Erfindung unterscheidet sich diese vorbekannte Arbeitsweise insbesondere durch den angestrebten Polymerisationstyp: Die Lehre der US-PS 4 116 903 will als Polymerisationstyp die Emulsionspolymerisation einsetzen und dabei wäßrige Alkydharzlösungen als Stabilisatoren verwenden. Das nachfolgend geschilderte Verfahren der Erfindung will demgegenüber keine Emulsionspolymerisation sondern eine Polymerisation in Lösung erreichen. Es wird also ein grundsätzlich anderer Typ des Polymerisationsverfahrens angestrebt und eingestellt. Damit werden wichtige Verbesserungen gegenüber dem Stand der Technik erreicht.

Aufgabe der Erfindung war es dementsprechend mittels eines Verfahrens der Polymerisation in Lösung Alkydacrylate zu schaffen, welche beim Einbrennen weder Amine noch flüchtige Lösungsmittel abgeben. Die Bindemittel sollten weiterhin keine Emulgatoren enthalten, die ihre Hydrophilie beim Einbrennvorgang behalten und so die Lacke negativ beeinflussen können. Gleichzeitig sollten die vorteilhaften technischen Eigenschaften der kombinierten Bindemittel gewahrt bleiben, andererseits aber Nachteile, z. B. die Neigung der Lacke zu Verlaufsstörungen oder Trübungen vermieden werden. Hochglänzende Lackschichten sollen insbesondere auch in pigmentierten Filmen gebildet werden können. Eine weitere Aufgabe der Erfindung war die Schaffung eines einfachen Herstellverfahrens für derartige kombinierte Harze.

Die Lösung der erfindungsgemäßen Aufgabe gelang überraschenderweise durch Polymerisation von Monomoren, welche zur Herstellung von Acrylatharzen überlicherweise verwendet werden, in bestimmt ausgewählten wäßrigen Alkydharz-Dispersionen besonders hohen Eeststoffgehalts ohne flüchtige Hilfsmittel und nichteinbrennbare Emulgatoren.

Alkydharz-Dispersionen im Sinne der Erfindung sind dabei die im folgenden näher beschriebenen feinteiligen Mikroemulsionen mit Teilchengrößen zwischen etwa 0,01 - 0,5 µm bzw. kolloidale Harzlösungen. Entsprechende Zubereitungen werden etwa in der DE-OS 29 22 370 beschrieben. Sie sind für das Auge klar oder leicht opak und homogen. Bei Verdünnen mit Wasser - zumindest bis zu einem Feststoffgehalt von 50 Gew.-% - ändert sich das Erscheinungsbild nicht.

Es wurde nun überraschend gefunden, daß Alkydharz-Dispersionen dieser Art bei besonders hohen Feststoffgehalten ein geeignetes Medium zur Polymerisation von Acrylatmonomeren darstellen, wobei solche Alkydharz-Dispersionen selber wie ein organisches Lösungsmittelgemisch wirken, so daß die Polymerisation in Lösung und nicht in Form einer Emulsionspolymerisation abläuft.

Als Polymerisationsmedium geeignete Alkydharz-Dispersionen sind also in erster Linie durch die verwendeten speziellen Hilfsstoffe gekennzeichnet. Was die Harze selbst anbelangt, können kurzölige und mittelölige Alkydharze mit Säurezahlen von 20 bis 30 verwendet werden. Bekannt sind beispielsweise Alkydharze mit Säurezahlen zwischen 20 und 30 und OH-Zahlen über 200. Diese Harze werden im allgemeinen mit den genannten speziellen Emulgatoren konfektioniert, welche beim Einbrennen ihre Hydrophilie verlieren.

Weiterhin geeignet sind zu Wasserlacken konfektionierbare ölfreie Polyester. Genannt seien insbesondere solche Harze, zu deren Herstellung innenständige oder endständige Olefinoxide mit mehr als 8 Kohlenstoffatomen verwendet worden sind. Schließlich können auch freie säuregruppenhaltige Alkydharze verwendet werden, die mit anderen Harzen, z.B. Epoxidharzen, Phenolharzen, Siliconharzen oder Umsetzungsprodukten von Isocyanaten modifiziert worden sind. Voraussetzung ist in allen genannten Fällen lediglich, daß sich diese Harze mit den genannten Hilfsstoffen zu wässrigen Harzzubereitungen konfektionieren lassen, welche zumindest bei einem Feststoffgehalt von über 60 Gew.-% und vorzugsweise von über 40 Gew.-% so homogen sind, daß sie für das Auge im wesentlichen klar erscheinen.

Die Herstellung der Alkydacrylate erfolgt nun, indem zu diesen wässrigen Alkydharzzubereitungen Monomere einzeln oder gemischt, portionsweise oder kontinuierlich unter solchen Bedingungen zugegeben werden, daß eine radikalische Polymerisation stattfinden kann. Geeignete Monomere sind die Aminsalze polymerisierbarer Säuren, wie z.B. der Acrylsäure, der Methacrylsäure und der Itaconsäure; desgleichen Ester dieser Säuren mit aliphatischen Alkoholen. Erwähnt seien insbesondere Methylmethacrylat, Ethylacrylat, 2-Hydroxy-ethylmethacrylat und Butylacrylat. Weitere geeignete Monomere sind Acrylnitril und Acrylamid.

Nach einer weiteren Ausführungsform der Erfindung kann ein Teil der monomeren Acrylsäure- oder Methacrylsäurederivate durch radikalisch polymerisierbare ungesättigte Kohlenwasserstoffe ersetzt werden, wobei Styrol, α -Methylstyrol und Butadien besonders geeignet sind. Bevorzugt können bis zu 60 Gew.-%, insbesondere 5-40 Gew.-% der eingesetzten Monomermischung aus Styrol bestehen.

Es ist bekannt, daß die Härte und Flexibilität von Acrylatlacken in erster Linie von den verwendeten Monomeren abhängt. So bedingt ein erhöhter Anteil an Methylmethacrylat und/oder Styrol eher harte Überzüge, während ein größerer Anteil an Butylacrylat oder Ethylacrylat weiche flexible Überzüge erbringt. Weiterhin bekannt ist es, zur Erzielung eines geringeren Molgewichtes und damit einer geringeren Viskosität des Lackes, sogenannte Regler zuzusetzen. Gängige Regler sind Verbindungen mit freien Mercaptogruppen, wie z.B. die Thioglykolsäure.

Verwendet man zur Härtung der Lacke Hexamethylolmelaminether oder ähnliche Melaminformaldehydkondensate so empfiehlt es sich, eine für das Kondensieren ausreichende Menge an Monomeren mit Hydroxylgruppen oder an Aminsalzen polymerisierbarer Säuren zu verwenden. Der Fachmann kann die geeignete Menge durch wenige Vorversuche feststellen. So ist z.B. ein Acrylat als geeignet anzusehen, das so zusammengesetzt ist, daß es eine Hydroxylzahl von 80 und eine Säurezahl von 20 aufweist.

Geeignete Amine, mit denen die polymerisierbaren Säuren vor der Polymerisation neutralisiert werden, sind in der deutschen Patentschrift 28 45 539 beschrieben. Die Amine sind unter Einbrennbedingungen nicht flüchtig und werden über vorhandene Hydroxylgruppen in den Lack eingebaut.

Zur Auslösung der Polymerisation in den wässrigen Alkydharzzubereitungen können gängige Initiatoren verwendet werden. Um jedoch zu vermeiden, daß anorganische Salze, die in Lacken nicht erwünscht sind, in den Zubereitungen verbleiben, sind organische Initiatoren aus der Gruppe der Azoverbindungen und der organischen Peroxide bevorzugt. Dem Fachmann sind eine Vielzahl derartiger Verbindungen mit einem breiten Anwendungsbereich bezüglich der Polymerisationstemperatur bekannt. Beispielsweise seien genannt: Azoisobutyronitril, Benzoylperoxid und Laurylperoxid.

Die genannten Monomeren sind teilweise gut in Wasser löslich, teilweise aber auch nur in organischen Lösungsmitteln löslich. Es war daher überraschend und in keiner Weise vorhersagbar, daß die genanntenwässrigen Alkydharz-Dispersionen ohne Auftreten einer Phasentrennung mit den erforderlichen Monomermengen versetzt werden konnten. Vielmehr blieben die Systeme auch während der Polymerisation homogen.

Über die Struktur der entstehenden Acrylatharze ist nichts bekannt, insbesondere nicht, in welchem Umfang chemische Bindungen zu den vorgelegten Alkydharz-Molekülen entstehen.

Es wird jedoch vermutet, daß die Makromoleküle des Acrylatharzes im großen und ganzen statistisch aufgebaut sind und mit den Alkydharz-Molekülen innig vermengt vorliegen. Entmischungsvorgänge wurden jedenfalls weder bei Erwärmen noch bei Abkühlen der Zubereitungen festgestellt.

Nach einer bevorzugten Ausführungsform der Erfindung werden die aus der deutschen Patentschrift 28 42 919 bekannten Mikroemulsionen als Polymerisationsmedium verwendet. Geeignet ist dabei ein System, das relativ niedermolekulares Alkydharz mit einer Säurezahl von 20 - 30 und einer Hydroxylzahl > 200 in Gegenwart eines nichtflüchtigen Neutralisationsmittels und eines Emulgators, welcher beim Einbrennen seine Wirksamkeit verliert, enthält.

Entsprechende Alkydharze werden hergestellt, indem bekannte Rohstoffe, also z.B. Gemische aus natürlichen Fettsäuren sowie Di- und Tricarbonsäuren wie Phthalsäure, Trimellitsäure, Adipinsäure, Sebacinsäure, Terephthalsäure und dergleichen mit mehrfunktionellen Alkoholen, wie Glycerin, Neopentylglykol, Diethylenglykol oder Trimethylolpropan unter veresternden Bedingungen umgesetzt werden. Zunächst wird bis zu einer Säurezahl zwischen 30 und 180 kondensiert und anschließend in einer zweiten Stufe durch Addition von Glycid bis zu einer Restsäurenzahl unter 30 verestert. Dadurch erhalten die Harze ihre hohe Hydroxylfunktionalität im angegebenen Bereich.

Beispiele für geeignete nicht flüchtige Amine zur Neutralisation finden sich in der DE-PS 28 45 539. Die dort beschriebenen Glycerylamine sind durch hohe OH-Funktionalität gekennzeichnet. Sie werden beim Einbrennen zum Lackbestandteil. Dies ist auch bei den eingesetzten Emulgatoren der Fall. Es werden vorteilhafterweise nicht-ionische Emulgatoren verwendet. Bevorzugt sind Emulgatoren, die durch Addition von Glycid an Nonylphenol oder längerkettige Monoamine oder Fettalkohole entstehen.

Anstelle dieser Emulgatoren können auch andere Emulgatoren mit reaktionsfähigen Gruppen im Molekül zugefügt werden, die beim Einbrennen ihre Hydrophilie verlieren, z.B. langkettige Aminoxiden. Alle diese führen nicht zu einer Wasseranfälligkeit des fertigen Lackfilms.

Nach einer weiteren bevorzugten Ausführungsform werden Wasserlacke auf Basis von Harzen mit einer Säurezahl um 40 und einer Hydroxylzahl um 150 verwendet. Derartige Harze benötigen aufgrund ihrer hohen Säurezahl im allgemeinen keine Emulgatoren.

Zur Herstellung der Alkydacrylate werden zunächst die wässrigen Alkydharz-Dispersionen je nach Viskosität mit Wasser auf einen Feststoffgehalt zwischen 90 und 60 % eingestellt. Im Einzelfall kann der Fachmann in Vorversuchen prüfen, wieviel Wasser zuzugeben ist, um eine geeignete, noch für die Polymerisation zuträgliche Ausgangsviskosität zu erreichen. Hierbei richtet man sich zweckmäßigerweise nach der Viskosität bei der Polymerisationstemperatur. Diese liegt je nach verwendetem Initiator - zwischen etwa 40°C und dem Siedepunkt der Gemische. Werden besonders hohe Molekulargewichte angestrebt und geeignete Initiatoren verwendet, kann aber auch bei Raumtemperatur oder darunter polymerisiert werden.

Die Monomeren werden einzeln oder gemischt, ganz oder portionsweise zugegeben. Dem Fachmann ist es anhand der Copolymerisationsparameter möglich, zu berechnen, welche Monomeren schneller bzw. langsamer zugegeben werden müssen, um einen einheitlichen statistischen Aufbau der Harzmoleküle zu erreichen, wenn dies gewünscht wird. Pro Gewichtsteil Alkydharz können bis zu 4 Gew.-Teile Acrylatharze so hergestellt werden. Es ist selbstverständlich möglich auch nur sehr geringe Acrylatharzmengen im Alkydharz zu erzeugen, wenn dies gewünscht wird. Das Gewichtsverhältnis von Alkydharz zu Acrylatharz liegt im Bereich von etwa 1:4 bis 9:1. Insbesondere hat sich ein Verhältnis Alkydharz zu Acrylatharz zwischen 1:2 und 5:1 bewährt. Um einen Viskositätsanstieg während der Polymerisation zu verhindern, kann mit Wasser nachverdünnt werden, so daß ein Gesamtfeststoffgehalt zwischen 80 und 30% resultiert. Vorzugsweise wird während der Polymerisation soviel Wasser zugegeben, daß das Gesamtsystem einen Feststoffgehalt zwischen 75 und 40 Gew.-% erreicht.

Mit den erfindungsgemäß herstellbaren Harzkombinationen lassen sich praktisch neutrale Wasserlacke mit einem pH-Wert zwischen 6 und 8 formulieren. In diesm pH-Bereich liegt eine besondere hydrolytische Beständigkeit der Harze vor und somit eine gute Lagerbeständigkeit. Die Verfahrensprodukte eignen sich als solche als Bindemittel für ofentrocknende wasserverdünnbare Lacksysteme, sie können jedoch auch mit anderen Wasserlacken in beliebigem Verhältnis verschnitten werden.

Zum Einbrennen der Lacke müssen Härtungskomponente zugegeben werden. · Geeignet sind Melaminharze, welche in großer Zahl im Handel angeboten werden. Besonders geeignet sind lösungsmittelfreie oder zumindest lösungsmittelarme Melaminharzzubereitungen und unter diesen insbesondere die Wasserverträglichen.

Das Einbrennen der Lacke erfolgt bei Temperaturen zwischen etwa 120 und 175°C, vorzugsweise jedoch zwischen 135 bis 165°G, während einer Zeit von 10 Minuten bis 40 Minuten. Dabei gelangt aufgrund der speziellen Formulierung praktisch kein flüchtiger Anteil in die Atmosphäre. In manchen Fällen ist es für die Praxis günstig, die erfindungsgemäß hergestellten Lacksysteme nach dem Auftragen einer Vortrocknung zu unterwerfen. Nachdem der größte Teil des Wassers verdampft ist, kann das Einbrennen in den Trockenöfen bzw. Trockenkanälen erfolgen.

Die erfindungsgemäß zu verwendenden Lacksysteme können zum Überziehen der verschiedensten Materialien wie Metall, Glas und eventuell Holzwerkstoff verwendet werden. Bevorzugt ist das Aufbringen von Überzügen auf Eisen und Stahl, Aluminium und anderen häufig in der Technik verwendeten Werkstoffen.

Die erfindungsgemäßen Lacksysteme können auch in bekannter Weise pigmentiert werden.

## Beispiele

### I. Herstellung einer wässrigen Alkydharzzubereitung

Die Kondensation erfolgte in einer beheizbaren Glasapparatur, die mit Rührer, Wasserabscheider und Stickstoffzufuhr versehen war, in üblicher Weise unter Zusatz von Xylol (80 ml) bis zur angegebenen Säurezahl.

Der Ansatz bestand aus
257,4 g Fettsäuren (1 % Myristin-, 11 % Palmitin-, 5 % Stearin-, 23 % Öl-, 58 % Linol-, 1 % Linolen und 1 % Arachinsäure)
84,6 g Glycerin
254,7 g Neopentylglykol
226,8 g Phthalsäureanhydrid
176,4 g Trimellitsäureanhydrid
Reaktionszeit: 1,5 Stunden
Reaktionstemperatur: maximal 190°C
Säurezahl: 95,5
Anschließend wurden 994,4 g des Kondensats der vorstehenden Stufe mit 73,2 g Glycerin bis zur Säurezahl 57,8 umgesetzt, wobei das zugesetzte Xylol praktisch vollständig zusammen mit dem Reaktionswasser entfernt wurde. Schließlich wurde an dieses Kondensat mit der Säurezahl 57,8 in einer dritten Reaktionsstufe Glycid addiert.
993,0 g Alkylharz (Säurezahl 57,8)
30,0 g Amin (Addukt aus 1 Mol Diethanolamin und 1 Mol Glycid)
48,3 g Glycid
Reaktionszeit: 10 Minuten
Reaktionstemperatur: 120°C
Säurezahl: 22,5
Das Alkylharz wurde in der Wärme mit 5,3 g des Adduktes von 7,5 Mol Glycid an 1 Mol Nonylphenol als Hilfsemulgator und 7,4 g des Adduktes von aus 1 Mol Glycid an 1 Mol Diethanolamin (bezogen auf 100 g Harz) vermischt. Anschließend wurde mit Wasser auf den gewünschten Aktivsubstanzgehalt verdünnt.

## II. Polymersation in der Alkylharz-Dispension

### Beispiel 1

100 g 85 %ige Harzlösung - hergestellt wie unter I beschrieben - wurden in einer Standardpolymerisationapparatur (Rührer, Rückflußkühler, Stichstoffzu- und -ableitung, Tropftrichter) vorleget und bei einer Temperatur zwischen 85 und 100°C während 90 min die folgende Mischung aus Monomeren, Regler und Initiator zugetropft:
Methylmethacrylat 24,8 g
Butylacrylat 18,6 g
2-Hydroxyethylmethacrylat 10,5 g
Methacrylsäure 5,6 g
Thrioglykolsäure 2,5 g
Azoisobutyronitril (AIBN) 0,6 g
Nach einer Nachreaktionszeit von 30 min wurden 23 g des Adduktes von 2 Mol Glycid an 1 Mol 2-Amino-2-methylpro-panol in der gleichen Menge Wasser zugegeben, sodann, zur Verbesserung der Rührbarkeit, 35 g Wasser. Die entstandene Harzlösung war klar bis leicht opak, unendlich wasserverdünnbar und hatte einen Feststoffgehalt (einschließlich Amine) von 70 Gew.-%. Alkyd/Acrylat-Verhältnis = 1:1.

### Beispiel 2

Beispiel 1 wurde mit der gleichen Alkydharzmenge (85 %ig) und unter gleichen Bedingungen nochmals ausgeführt, jedoch wurden die Monomermengen wie folgt geändert:
6,5 g Methylmethacrylat
5,6 g Butylacrylat
3,2 g 2-Hydroxyethylmethacrylat
2,7 g Methacrylsäure
0,8 g Thioglykolsäure
0,2 g AIBN
Nach der Nachreaktionszeit von 30 min wurden 9,5 g des Adduktes von 2 Mol Glycid an 1 Mol 2-Amino-2-methylpropanol in der gleichen Menge Wasser zugegeben, sodann 4,0 Wasser zur Einstellung auf 80 % Feststoff. Die entstandene Harzlösung war klar und unendlich wasserverdünnbar. Das Alkyd/Acrylat-Verhältnis betrug 3: 1, die Säurezahl der Acrylatkomponente 120.

**Beispiel 3**

Analog wurde ein Harz hergestellt aus
8,6 g Methylmethacrylat
6,4 g Butylacrylat
3,6 g 2-Hydroxyethylmethacrylat
2,6 g Methacrylsäure
0,2 g AIBN
Addukt von 2 Mol Glycid an 2-Amino-2-methylpropanol 7,2 g in 13,4 g Wasser.

Die Harzlösung war klar, unendlich wasserverdünnbar, Alkyd/Acrylat-Verhältnis 3:1, Säurezahl der Acrylatkomponente 80, Feststoffanteil 80 %.

**Beispiel 4**

Analog wurde ein Harz hergestellt aus:
5,2 g Methylmethacrylat
3,8 g Butylacrylat
2,2 g 2-Hydroxyethylmethacrylat
1,6 g Methacrylsäure
0,1 g AIBN
Amin (wie Beispiel 3) Menge: 4,3 g in 10,4 g Wasser. Die Harzlösung war klar, unendlich wasserverdünnbar, Alkyd/Acrylat-Verhältnis = 5: 1, Feststoffanteil 30 %.

**Beispiel 5**

(Verglgeichsbeispiel)
Das Alkydharz aus Beispiel 1 wurde zu 50 Gew.-% in Wasser gelöst und 100 g wie beschrieben als "Lösungsmittel" eingesetzt für die Polymerisation von:
13,9 g Ethylacrylat
22,0 g Methylmethacrylat
8,2 g 2-Hydroxyethylmethacrylat
6,1 g Methacrylsäure
0,5 g AIBN
16,83 g des Addukts von 2 Mol Glycid an 1 Mol. 2-Amino-2-methylpropanol, gelöst in der gleichen Menge Wasser, waren dem Alkydharz vor den Monomeren zugefügt worden. Zur besseren Rührbarkeit wurden 50 g Wasser während der Polymerisstion zugegeben.

Das erhaltene Produkt war nicht mehr eine klare Harzlösung sondern eine weiße Dispersion mit einem Feststoffanteil von 50 % und einem Alkyd/Acrylat-Verhältnis von 3: 4 (jeweils neutralisierte Form inklusive Amin).

**Beispiel 6a**

(Vergleichsbeispiel)
Nach bekannten Verfahren wurde ein Acrylatharz in Emulsion wie folgt hergestellt:
In einer Standardpolymerisationsapparatur wurden 433 g Wasser und 4 g Laurylalkohol-2-ethylenoxid-sulfat-Na-Salz sowie 12 g Thioglykolsäure vorgelegt und nach Spülen mit Stickstoff die folgenden Monomeren und der Initiator während einer Stunde bei 90° C zugetropft:
116 g Methylmethacrylat
87 g Butylacrylat
50 g 2-Hydroxyethylmethacrylat
26 g Methacrylsäure
3 g AIBN
Die Dispersion wurde einer 30 minutigen Nachreaktion unterzogen und dann mit 103 g des Adduktes von 2 Mol Glycid an 2-Amino-2-methylpropanol in 166 g Wasser neutralisiert. Es entstand eine trübe Harzlösung mit 40 % Feststoffanteil.

**Beispiel 6b**

(Vergleichsbeispiel)
Durch Mischen des Alkydharzes aus (I) mit dem Acrylatharz aus Beispiel 6a wurde ein Alkydacrylat mit dem Verhältnis Alkyd zu Acrylat 1: 1 und einem Feststoffgehalt von 50 % hergestellt. Die Harzlösung war opak.

**Beispiel 7**

(Vergleichsbeispiel)
In gleicher Weise wurde eine Harzlösung mit einem Verhältnis Alkyd/Acrylat 3:1 und einem Feststoffgehalt von 50 % hergestellt. Die Harzlösung war opak.

**III Herstellung von Lackfilmen**

Zur Herstellung von Lacken wurden die in den Beispielen 1 bis 4 beschriebenen Produkte mit dem Hexamethylether des Hexamethylolmelamins (HMMM) als Vernetzer im Gewichtsverhältnis Alkydacrylat zu Melaminharz wie 7:3 versetzt. Dann wurde auf einen Feststoffgehalt von 45 % mit Wasser eingestellt. Zur Prüfung der Lackfilmeigenschaften wurden die Überzugsmittel auf entfettete Stahlplatten aufgestrichen und 20 min bei 150° C eingebrannt. Die Trockenfilmdicke betrug 50 µm. Alle Lackfilme waren klar, hart und glänzend. Während die Bindemittel aus den Beispielen 1 - 4 Überzüge ohne Verlaufsstörungen lieferten, zeigten die mit den Vergleichsprodukten 6b und 7 beschichten Bleche starke Kraterbildung.

Auf den Beschichtungen wurden Pendelhärten nach DIN 53 157 bestimmt. Diese betrugen bei den Beispielen 1 - 5 125 - 150 sec, bei 6b und 7 144 sec bzw. 106 sec; wobei bei den Vergleichsbeispielen eine starke Abhängigkeit von der Meßstelle auftrat. Die Tiefziehprüfung nach Erichsen ergab Werte zwischen 7,5 und 10,0 mm, je nach Pendelhärte.

## Patentansprüche

1. Verfahren zur Herstellung von wasserverdünnbaren Harzzubereitungen auf Basis von Alkydharzen und Polyacrylaten (Alkylacrylate), die beim Einbrennen keine flüchtigen Lösungsmittel abgeben, dadurch gekennzeichnet, daß man in einer ersten Verfahrensstufe in an sich bekannter Weise wasserverdünnbare, homogene, optisch klare oder leicht opake Alkydharz-Dispersionen herstellt, die eine Säurezahl von 20 bis 30 und eine Hydroxylzahl von 150 bis 300 haben sowie einen Feststoffgehalt zwischen 90 und 60% aufweisen und anschließend in einer zweiten Verfahrensstufe monomere Acrylsäure- bzw. Methacrylsäurederivate gelöst in der so erhaltenen Alkydharz-Dispersion und gegebenenfalls unter Wasserzusatz polymerisiert, so daß ein Gesamtfeststoffgehalt zwischen 80 und 30% resultiert, wobei das Verhältnis von Alkydharz zu Acrylatharz zwischen etwa 1: 4 und 9: 1 variieren kann.

2. Verfahren nach Anspruch 1, dadurch gekennzeichnet, daß man den Gesamtfeststoffgehalt der Alkydacrylat-Zubereitungen auf 75 bis 40% einstellt und dabei das Verhältnis von Alkydharz zu Acrylatharz zwischen 1:2 und 5:1 liegt.

3. Abwandlung des Verfahrens nach Anspruch 1, dadurch gekennzeichnet, daß zusammen mit den Acrylsäure- bzw. Methacrylsäurederivaten anteilsweise andere radikalisch polymerisierbare Kohlenwasserstoffe, insbesondere Styrol, mitverwendet werden.

4. Verfahren nach Anspruch 3, dadurch gekennziechnet, daß 5 bis 40 Gewichtsprozent Styrol, bezogen auf Gesamtmonomere, verwendet werden.

5. Verwendung der Verfahrensprodukte nach den Ansprüchen 1 bis 4 als Bindemittel für ofentrocknende wasserverdünnbare Lacksysteme, wobei sie in einer Menge von 20 bis 60 Gewichtsprozent, bezogen auf den Lack, vorliegen.

## Revendications

1. Procédé de fabrication de préparations résineuses diluables à l'eau, à base de résines alkydes et de polyacrylates (acrylates d'alcoyle), qui à la cuisson ne dégagent pas de solvants volatils, caractérisé en ce que dans un premier stade opératoire on prépare d'une manière connue en elle-même des dispersions de résine alkyde diluables à l'eau, homogènes, optiquement limpides ou légèrement opaques qui ont un indice d'acide de 20 à 30 et un indice d'hydroxyle de 150 à 300 et présentent de même une teneur en matière solide entre 90 et 60%, puis, dans un deuxième stade opératoire, on dissout des dérivés monomères d'acide acrylique ou d'acide méthacrylique dans la dispersion de résine alkyde ainsi obtenue et on polymérise, le cas échéant avec addition d'eau, en sorte qu'il en résulte une teneur totale en matière solide entre 80 et 30%, le rapport entre la résine alkyde et la résine d'acrylate pouvant varier entre environ 1:4 et 9:1.

2. Procédé selon la revendication 1, caractérisé en ce qu'on régle la teneur totale en matière solide des préparations alkyde-acrylate à 75 - 40%, le rapport entre résine alkyde et résine d'acrylate se situant entre 1:2 et 5:1.

3. Modification du procédé selon la revendication 1, caractérisée en ce que conjointement avec les dérivés d'acide acrylique ou d'acide méthacrylique, on utilise en partie d'autres hydrocarbures polymérisables par la voie radicalaire, en particulier du styrène.

4. Procédé selon la revendication 3, caractérisé en ce qu'on utilise 5 à 40% en poids de styrène par rapport aux monomères totaux.

5. Utilisation des produits du procédé selon les revendications 1 à 4 comme liants pour systèmes de vernis diluables à l'eau et qui sont cuits au four, ceux-ci représentant une quantité de 20 à 60% en poids par rapport au vernis.

## Claims

1. A process for the production of water-dilutable resin preparations based on alkyd resins and polyacrylates (alkylacrylates) which do not give off any volatile solvents on stoving, characterized in that, in a first step, water-dilutable, homogeneous, optically clear and slightly opaque alkyd resin dispersions having an acid number of from 20 to 30, a hydroxyl number of from 150 to 300 and a solids content of from 90 to 60% are prepared in known manner and, in a second step, monomeric acrylic acid or methacrylic acid derivatives are polymerized in solution in the alkyd resin dispersion thus obtained, optionally in the presence of water, so that a total solids content of from 80 to 30% is obtained, the ratio of alkyd resin to acrylate resin being variable from about 1:4 to 9:1.

2. A process as claimed in Claim I, characterized in that the total solids content of the alkyd-acrylate preparations is adjusted to 75-40%, the ratio of alkyd resin to acrylate resin being from 1:2 to 5:1.

3. A modification of the process claimed in

Claim I, characterized in that other radically polymerizable hydrocarbons, particularly styrene, are used proportionately together with the acrylic acid or methacrylic acid derivatives.

4. A process as claimed in Claim 3, characterized in that from 5 to 40% by weight styrene, based on total monomer, are used.

5. The use of the products obtained by the process claimed in Claims 1 to 4 as binders for oven-drying water-dilutable lacquer systems in a quantity of from 20 to 60% by weight, based on the lacquer.